# EUROPEAN PATENT SPECIFICATION

(11) **EP 0 708 055 B1**
(45) Date of publication and mention of the grant of the patent: **05.04.2000**
(21) Application number: 94830456.3
(22) Date of filing: 26.09.1994
(51) Int. Cl.: C01B 3/00, G21B 1/00

(54) **A method for inducing metal systems to absorb large quantities of hydrogen and its isotopes, and equipment for carrying out the method**
Verfahren und Gegenstand zur Induzierung eines Metallsystems um grössere Mengen von Wasserstoff oder Wasserstoffisotope zu absorbieren
Méthode et dispositif pour induire un système métallique à absorber des grandes quantités d'hydrogène ou des Botopes d'hydrogène

(43) Date of publication of application: 24.04.1996
(73) Proprietor: LEDA S.R.L., 20123 Milano (IT)
(72) Inventor: Preparata, Giuliano, I-20133 Milano (IT)
(74) Representative: Ferreccio, Rinaldo

(56) References cited:
- EP-A- 0 568 118
- DE-A- 3 915 153
- DATABASE WPI Week 9427, Derwent Publications Ltd., London, GB; AN 94-222975/27 & JP-A-6 160 560 (C. FURAYA) 7 June 1994
- PATENT ABSTRACTS OF JAPAN vol. 012, no. 168 (E-611) 20 May 1988 & JP-A-62 278 753 (TOSHIBA BATTERY CO. LTD.) 3 December 1987
- FUSION TECHNOLOGY, vol.24, September 1993, LAGRANGE PARK, ILLINOIS US pages 205 - 228 J. DUFOUR 'Cold fusion by sparking in hydrogen isotopes'
- FUSION TECHNOLOGY, vol.18, August 1990, LAGRANGE PARK, ILLINOIS US pages 103 - 114 C. D. SCOTT ET AL. 'Measurement of excess heat and apparent coincident increases in the neutron and gamma-ray count rates during the electrolysis of heavy water'

## Description

The present invention relates to a method for inducing metal systems to absorb large quantities of hydrogen and its isotopes (deuterium and tritium).

It also relates to equipment for implementing this method by inducing the absorption of hydrogen and its isotopes.

It is known that the use of hydrogen as a non-polluting fuel is constantly gaining ground as it does not form carbon dioxide when burnt.

Hydrogen can be used to produce heat by combustion or to produce electricity directly in fuel cells. Its use, and that of its isotopes, as a nuclear fuel in fusion reactions is also envisaged.

Such applications give rise to the need to store hydrogen so that it is available for use where necessary.

Systems are known for storing hydrogen. It can, for example, be kept in the liquid state, under high pressure, in cylinders and the like. Such systems are, however, very expensive owing to the cost of liquefying the hydrogen and the hydrogen is, in any case, dangerous in this state as it is highly inflammable.

Another system uses chemical compounds, such as methanol, with a high hydrogen content, which are then subjected to a process for reforming the hydrogen when it is required for use. This system, however, calls for equipment which can carry out the reforming process where and when required, which increases its cost.

Another system for storing hydrogen consists of inducing large quantities of hydrogen to be stored in metal systems by absorption of the gas in the metal.

It is known that numerous metals are able to absorb hydrogen and its isotopes under suitable conditions of pressure and temperature.

The quantity of hydrogen absorbed depends on the electronic and structural characteristics of each material and on any chemical or physical treatments applied to the material to influence the kinetics of the migration of the hydrogen into the metal.

The hydrogen may be absorbed either from a gaseous phase or from an electrolytic solution by a metal system constituting the cathode of an electrolytic cell.

In the first case, the hydrogen molecules are split into hydrogen atoms adjacent a metal surface and these are subsequently ionised during the absorption. In order for this to occur, the hydrogen must overcome an energy barrier determined by the difference between the chemical potential of the metal and that of the gas.

In the second case, the hydrogen is already ionised and the energy barrier to be overcome is determined by the difference in chemical potential between the metal system and the electrolytic solution.

It is also known that the nuclei of hydrogen or its isotopes, when absorbed into metals, take up interstitial positions between the atomic nuclei of the metal, have far greater mobility than the latter nuclei and have an electrical charge other than zero.

These hydrogen nuclei are thus subject to any electrical forces applied to the metal system.

More recently it has been observed, in several laboratory experiments, that metal systems loaded with hydrogen isotopes emit radiation of nuclear origin, such as neutrons, tritium, gamma rays, which would indicate the occurrence of nuclear fusion between the aforesaid isotopes (E. Yamaguchi and T. Nishioka in Jpn. J. Applied Phys., page L666, Vol. 29 of 1990.)

In addition, in other experiments with electrolytically-induced absorption, the production of a quantity of heat has been observed which can be explained only if considered as due to the occurrence of nuclear fusion reactions within the metal system used as the cathode (M. Fleischmann, S. Pons, M. Hawkins in J. Electroanal. Chem., Vol. 261, page 301 (1989).

The need to store considerable quantities of hydrogen safely and the possibilities opened up by the aforesaid experiments make the possibility of storing large quantities of hydrogen and/or its isotopes in metal of great technical interest.

Until now, the quantity of hydrogen and/or its isotopes which could be stored in a metal system could not exceed that corresponding to the chemical equilibrium determined by the conditions of pressure and temperature imposed.

Therefore, in order to achieve ever greater absorption, it was necessary to impose pressures and temperatures such as to make the prior art processes expensive and not free of the danger of explosions.

According to theoretical calculations in the field of quantum electrodynamics (G. Preparata, "Coherence in QCD and QED", Common Problems and Ideas of Modern Physics; T. Bressani et al. Eds. World Scientific Ed., page 1-56 [1992]), applied to condensed material, some of the nuclei of hydrogen and/or its isotopes absorbed in a metal could resonate in phase with each other, in a so-called coherent state, within limited regions of the metal.

The aforesaid state corresponds to a chemical potential which is increased by an amount given by the product of the effective electrical charge of the nucleus of hydrogen and/or its isotopes and an applied electrical potential.

Such an increase thus corresponds to an increase in the probability that a nucleus of hydrogen and/or its isotopes will be absorbed by the metal.

Document JP-A-6 160 560 discloses a device for carrying out the electrolysis of heavy water for normal temperature nuclear fusion. The device comprises a negative and a positive electrode placed in an electrolysis vessel and a heating medium passing through or kept into contact with a heavy water-impermeable barrier layer in the negative electrode.

Document JP-A-62 278 753 discloses a metal oxide-hydrogen battery comprising a negative electrode obtained by pressing wirelike current collectors in a winding direction of electrodes against a sheet-like mold containing a hydrogen storage alloy.

The technical problem at the root of the present invention consists of devising a method for inducing a large quantity of hydrogen to be absorbed by a metal system that enables the problem mentioned in connection with the prior art to be overcome and which accords with the theory described above.

This problem is overcome by a method of the type specified, characterised in that it includes a step of absorption of the hydrogen and/or its isotopes in which an electrical voltage is applied to the ends of at least one continuous metal wire, constituting the said metal system and having a cross-section, so as to achieve a drop in electrical potential along the metal wire, said continuous metal wire having at least one portion constituting the metal system arranged in a confined space containing nuclei of hydrogen and/or its isotopes

The present invention also relates to equipment for implementing the aforesaid method, characterised in that it includes a continuous metal wire with a cross-section, the ends whereof are connected to respective different poles of a voltage generator, at least one portion of the metal wire defining a metal system and being arranged in a confined space containing in use nuclei of hydrogen and/or its isotopes to be absorbed.

The principle advantage of the method and the equipment according to the invention lies in the fact that it is possible to achieve a higher absorption of hydrogen and/or its isotopes than that which would correspond to the chemical equilibrium determined by the conditions of pressure and temperature selected.

Further characteristics and advantages of the method for inducing an high absorption of hydrogen and its isotopes in metal systems and of the equipment for achieving this will become more apparent from the detailed description of a preferred embodiment given below purely by way of non-limitative example, with reference to the following drawings:
Figure 1 is a schematic cross-sectional view of a gas cell for implementing the method of the invention;
Figure 2 is a partially-sectioned perspective view of one embodiment of equipment for implementing the method of the invention;
Figure 3 is a perspective view, in partial section, of a different embodiment of equipment for implementing the method of the invention; and
Figure 4 is a perspective view, in partial section, of a further embodiment of equipment for implementing the method of the invention.

In a preferred version of the method of the invention, the predetermined potential drop along the continuous metal wire is greater than 10 Volts. In addition, the continuous metal wire has a cross-sectional area of less than 0.01 mm² and a length of more than 100 mm.

To advantage, the continuous metal wire has an electrical resistance greater than 1 Ohm, preferably greater than 10 Ohm.

In addition, the metal wire includes one or more metal elements from the following selection: Scandium (Sc), Titanium (Ti), Vanadium (V), Chromium (Cr), Manganese (Mn), Iron (Fe), Cobalt (Co), Nickel (Ni), Copper (Cu), Yttrium (Y), Zirconium (Zr), Niobium (Nb), Molybdenum (Mo), Technetium (Tc), Ruthenium (Ru), Rhodium (Rd), Palladium (Pd), Silver (Ag), Hafnium (Hf), Tantalum (Ta), Tungsten (W), Rhenium (Re), Osmium (Os), Iridium (Ir), Platinum (Pt), Gold (Au), any Lanthanide or Actinide.

Furthermore, during the absorption step, the pressure of the hydrogen and/or its isotopes is less than 1,000 kPa while the temperature thereof is below 100°C, preferably below 60°C.

### EXAMPLE

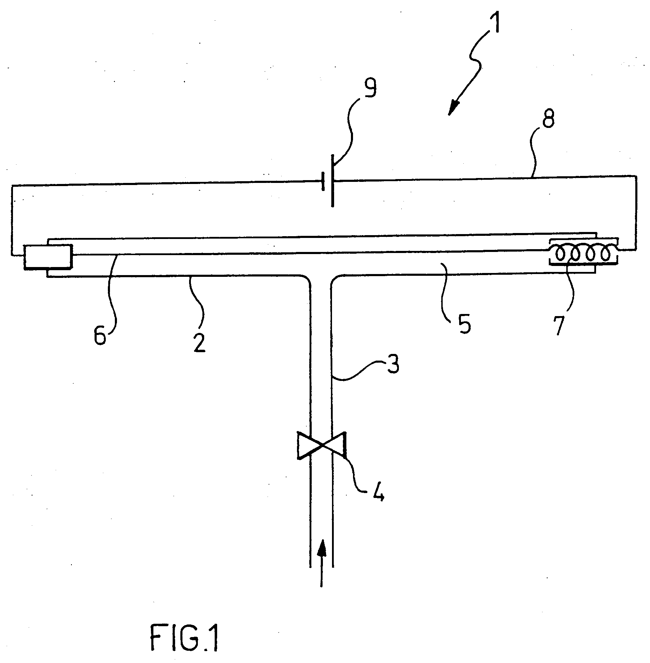

Figure 1 illustrates schematically a gas cell, indicated 1, for implementing the method of the invention. It comprises a tubular vessel 2 communicating with the outside through a supply duct 3 fitted with a valve 4 and defining a closed environment 5.

The vessel 2 contains a metal wire 6 held taut by springs 7 at its ends.

The metal wire 6 is connected in an electrical circuit 8 including a voltage generator 9.

The gas cell described above contains a 150 mm length of circular-section palladium wire with a diameter of 0.05 mm.

Hydrogen gas was introduced into the gas cell at a pressure of 150 kPa and a temperature of 50°C.

In these conditions of temperature and pressure, there was measured the average hydrogen content, indicated X, corresponding to the chemical equilibrium determined by the conditions themselves, X being defined as the ratio of the number of hydrogen atoms absorbed to the number of metal atoms in the wire, and was found to be 0.7.

This quantity can be measured either on the basis of the variation in the electrical resistance of the wire or on the basis of the change in its length; in this example X was determined on the basis of the variation in electrical resistance.

In the subsequent absorption step, a voltage of 15.6 V was applied to the wire, giving a current through the wire of 0.6 A for a first period of 400 s, at the end of which the average value of X was found to be 0.95.

During this absorption step, an average electrical field of 104 V/m was set up along the wire.

During a further absorption step, a voltage of 36 V was applied to the wire, giving a current through the wire of 0.85 A for a second period of 550 s, at the end of which the average value of X was 1.05.

During this absorption step, an average electrical field of 240 Volt/m was set up along the wire.

These average values of X correspond to chemical equilibria determined by pressure conditions far greater than those cited.

In addition to the aforesaid advantage, according to the laboratory experiments mentioned above, the method of the invention may cause a quantity of heat to be generated in the continuous metal wire which can be explained by the occurrence of nuclear fusion reactions within this wire.

To advantage, this heat may be removed and used to produce other forms of energy.

Furthermore, the method of the invention may be implemented by arranging the continuous metal wire as the cathode of an electrolytic cell or, preferably, so that the wire itself constitutes the cathode, In any case immersed in an electrolytic solution in which hydrogen and/or its isotopes are released as ions.

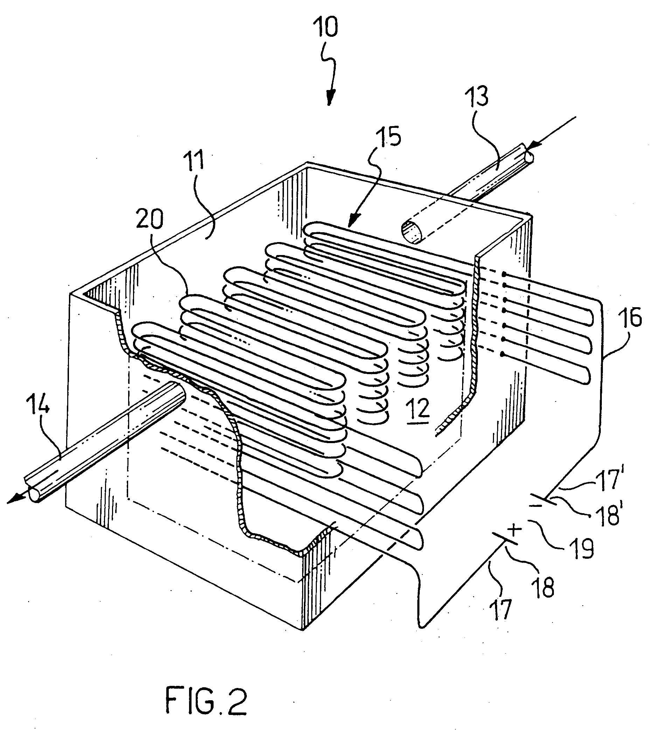

Figures 2 to 4 show three different embodiments of loading equipment for implementing the method described above.

In these drawings and In the following description of the equipment, structural components which carry out the same functions are indicated by the same reference numbers.

In Figure 2, one embodiment of equipment for implementing the method described above is indicated 10. It comprises a box-shaped vessel 11 delimiting a confined space 12.

The equipment 10 also includes a continuous metal wire 16 of limited cross-section, a portion 20 whereof is arranged in the confined space 12. This portion 20 of the metal wire 16 is arranged in serpentine coils in closely-spaced, parallel, superposed planes in a so-called boustrophedonic path.

The portion 20 of metal wire 16 thus arranged in the confined space 12 constitutes a metal system 15.

The metal wire 16 has two separate ends 17, 17' which project from the vessel 11 and are connected to the poles indicated 18, 18' of a voltage generator 19.

The vessel 11 also has an inlet duct 13 and an outlet duct 14.

In addition, means are provided for taking heat from the continuous metal wire 16, the means being constituted in this embodiment of the equipment 10 by the ducts 13 and 14.

Heat is generated in the portion 20 of the metal wire 16 by the Joule effect. In addition, according to the laboratory experiments mentioned above, an additional quantity of heat may be generated and may be taken away through the ducts 13 and 14 and used.

As far as the operation of the equipment 10 of Figure 2 is concerned, through the ducts 13, 14 it is possible to introduce an atmosphere containing hydrogen and/or its isotopes to be absorbed by the metal wire 16, the element being introduced in molecular form, in the gaseous phase and at the desired pressure and temperature.

Once the desired operating conditions have been achieved, a voltage is applied to the metal wire 16 by the generator 19 for an appropriate period of time, thereby implementing the absorption step of the method according to the invention.

Either simultaneously or subsequently, the heat generated in the portion 20 of the metal wire 16 is removed through the ducts 13, 14. The heat is given up by the portion 20 of the wire 16 by natural convection to the gaseous atmosphere in the confined space 12 and by conduction through the wire 16 itself.

The gas withdrawn from the confined space 12 through the duct 14 can be cooled, for example, by a gas/gas or gas/liquid heat exchanger, not shown, which then returns the gas to the vessel 11 through the inlet duct 13.

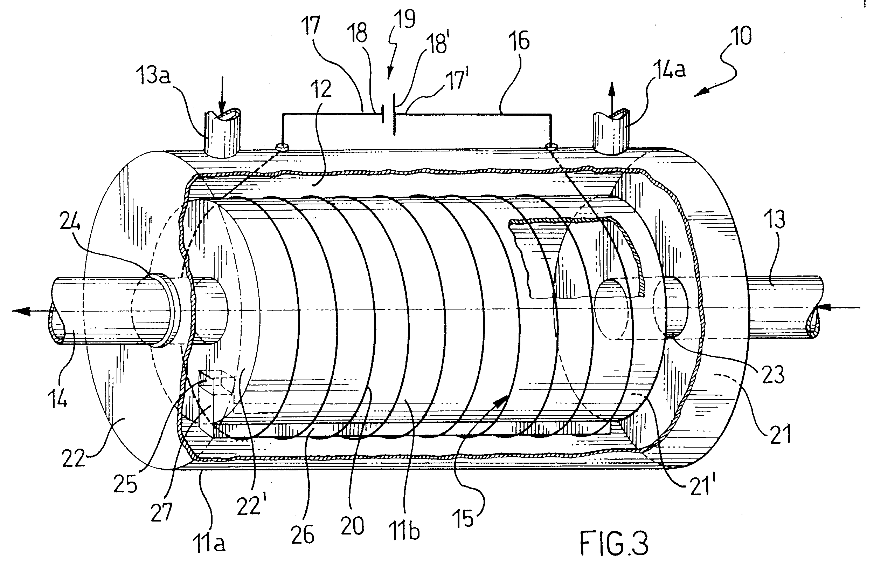

In Figure 3, another embodiment of the loading equipment 10 for implementing the method of the invention includes an outer cylindrical vessel 11a having ends 21 and 22.

Adjacent the ends 21 and 22 the vessel 11a has an inlet section 23 and an outlet section 24 respectively.

An inner cylindrical vessel 11b is centred in the outer cylindrical vessel 11a and has ends 21' and 22'.

An inlet duct 13 and an outlet duct 14 extend from the ends 21' and 22' respectively and project from the outer cylindrical vessel 11a through the inlet section 23 and the outlet section 24 respectively.

The sections 23, 24 are entirely filled by the ducts 13, 14 so as to form a fluid-tight seal.

The outer cylindrical vessel 11a and the cylindrical vessel 11b define a confined space 12 between them.

The equipment 10 further includes a continuous metal wire 16 of limited cross-sectional area with a portion 20 inside the confined space 12 wound into a coil around the inner cylindrical vessel 11b.

The portion 20 of the metal wire 16 thus arranged in the confined space 12 constitutes a metal system 15.

In a manner similar to that of the embodiment described above, means for removing heat from the continuous metal wire 16 are provided in the equipment of Figure 3 and are constituted, in this embodiment, by the inner cylindrical vessel 11b.

To this end, the portion 20 of the wire 16 is wound on the vessel 11b so as to achieve conductive thermal contact between the vessel 11b and the metal wire 16.

To advantage, the inner cylindrical vessel 11b is made of a material which is a good conductor of heat and its surface which contacts the wire 16 is electrically insulated.

A heat-transfer fluid is contained in the cylindrical vessel 11b and receives heat through the latter, this fluid being removable and renewable through the ducts 13 and 14.

The metal wire 16 projects from the outer cylindrical vessel 11a where it has two ends 17, 17' connected to the poles 18, 18' of a voltage generator 19.

The outer cylindrical vessel 11a also has a secondary inlet duct 13a and a secondary outlet duct 14a.

In addition, grooves 25 are formed in the ends 21', 22' of the inner cylindrical vessel 11b and a bar 26 is mechanically engaged therein, being interposed between the portion 20 of the continuous metal wire 16 and the inner cylindrical vessel 11b and positioned beneath this vessel 11b with its ends 27 projecting.

This bar constitutes means for maintaining the continuous metal wire 16 under tension.

In fact the projections 27 are free to move in the respective grooves 25 whereby the bar 26 tends to fall under gravity, maintaining the portion 20 of the wire 16 under tension even when the length of the latter varies, thereby ensuring good thermal contact between the portion 20 and the vessel 11b.

As to the operation of the equipment 10 of Figure 3, through the secondary ducts 13a, 14a, it is possible to introduce an atmosphere containing hydrogen and/or its isotopes to be absorbed by the metal wire 16, the element being introduced in molecular form, in the gaseous phase and at the desired pressure and temperature.

Once the desired operating conditions have been reached, a voltage is applied to the metal wire 16 by the generator 19 for an appropriate period of time.

The heat generated in the portion 20 of the metal wire 16 is given up by conduction to the inner cylindrical vessel 11b and from there by natural or forced convection to the heat-transfer fluid contained therein.

Either simultaneously or subsequently this heat is removed through the ducts 13 and 14.

The heat-transfer fluid is renewed and cooled after being withdrawn through the outlet duct 14 and is subsequently returned to the vessel 11b through the inlet duct 13.

The heat-transfer fluid removed from the inner cylindrical vessel 11b can be cooled, for example, by a heat exchanger, not shown, in a similar manner to that used for the preceding embodiment of the invention.

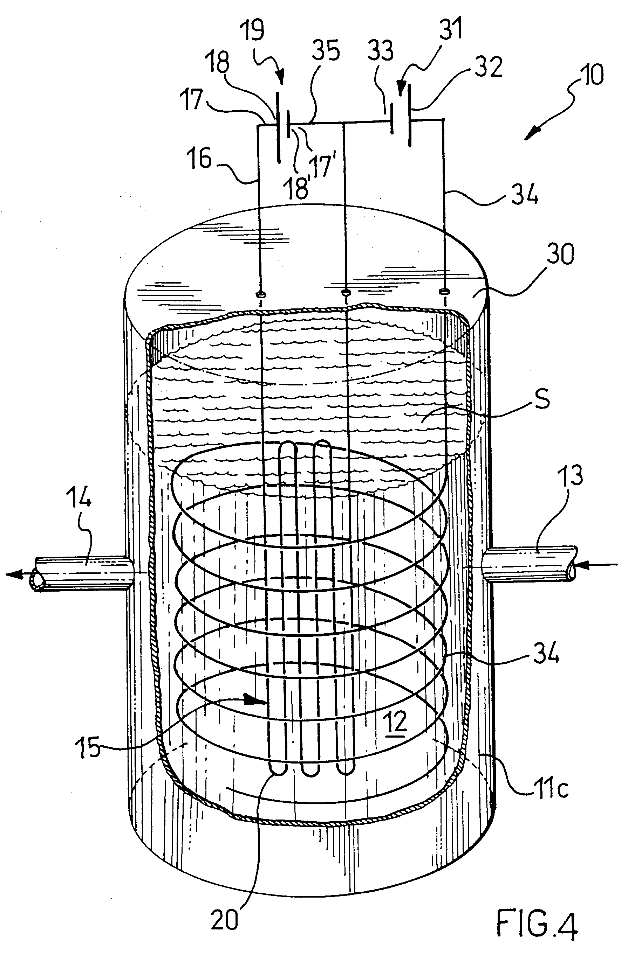

In Figure 4, a further embodiment of the equipment 10 for implementing the method of the invention is shown comprising an electrolytic cell 30 having a cylindrical vessel 11c containing an electrolytic solution S which can release hydrogen and/or its isotopes in ionic form.

This cylindrical vessel 11c defines a confined space 12.

The electrolytic cell 30 includes an electrical generator 31 having a positive pole 32 and a negative pole 33.

The positive pole 32 is connected to an anode in the form of a conductive wire 34 arranged in a coil extending the full height of the vessel 11c close to the peripheral wall thereof.

A cathode 35 is connected to the negative pole 33 and is in the form of a continuous metal wire 16 of limited cross-sectional area, connected in a closed electrical circuit with a voltage generator 19 arranged outside the vessel 11c and having separate poles 18, 18' to which respective ends 17, 17' of the wire 16 are connected.

The continuous metal wire 16 has a portion 20 immersed in the electrolytic solution S inside the confined space 12. This portion 20 is in a serpentine arrangement so as to enable the longest possible length of metal wire 16 to be fitted into the confined space 12.

This portion 20 is centred on the coil of the anode 34 and, thus arranged in the confined space, constitutes a metal system 15.

The cylindrical vessel 11c also has an inlet duct 13 and an outlet duct 14.

In addition, means are provided for removing the heat from the continuous metal wire 16 and are constituted, in this variant of the equipment 10, by the ducts 13 and 14.

As far as the operation of the equipment 10 of Figure 4 is concerned, switching on of the generator 31 causes an electrolytic reaction to occur in the electrolytic solution S.

Negative ions known as anions are released in the vicinity of the conductive wire 34 constituting the anode of the electrolytic cell 30. Simultaneously, positive ions of hydrogen and/or its isotopes to be absorbed are released in the vicinity of the portion 20 of the continuous metal wire 16 constituting the cathode 35 of the electrolytic cell 30.

Once desired operating conditions have been reached, a voltage is applied to the metal wire 16 by the generator 19 for an appropriate period of time so as to implement the absorption step described in the method according to the invention.

Simultaneously or subsequently, the heat generated in the portion 20 of the metal wire 16 is removed through the ducts 13 and 14. The portion 20 of the wire 16 gives up this heat by natural convection to the electrolytic solution S contained in the confined space 12.

This solution S is renewed and cooled after being withdrawn through the outlet duct 14 and is subsequently returned to the vessel 11 through the inlet duct 13.

The solution removed from the defined space 12 may be cooled, for example, by a heat exchanger, which is not shown.

At least the portion 20 of the metal wire 16 described in the equipment 10 of Figures 2 to 4 preferably has a cross-section of less that 0.01 mm² and a length of more than 100 mm.

Furthermore, it is made of a metal material including one or more metal elements selected from the following group: Scandium (Sc), Titanium (Ti), Vanadium (V), Chromium (Cr), Manganese (Mn), Iron (Fe), Cobalt (Co), Nickel (Ni), Copper (Cu), Yttrium (Y), Zirconium (Zr), Niobium (Nb), Molybdenum (Mo), Technetium (Tc), Ruthenium (Ru), Rhodium (Rd), Palladium (Pd), Silver (Ag), Hafnium (Hf), Tantalum (Ta), Tungsten (W), Rhenium (Re), Osmium ()s), Iridium (Ir), Platinum (Pt), Gold (Au), any Lanthanide or Actinide.

To advantage, the drop in electrical potential along the portion 20 of the metal wire 16 is at least 10 Volts.

Furthermore, the portion 20 of the metal wire 16 has an electrical resistance of more than 1 Ohm, preferably more than 10 Ohm.

In addition to the aforesaid advantage, the equipment 10 of the invention is structurally simple and economical to manufacture.

It also enables the quantity of hydrogen stored and the temperature of the metal wire 16 to be regulated accurately by means of the heat-removal means 11b, 13 and 14.

Furthermore, the heat-removal means 11b, 13 and 14 make it possible to exploit any excess heat which may be produced in the metal wire 16 as indicated by the laboratory experiments mentioned above.

The presence of the means 26 for tensioning the wire 16 prevents any undesired contact between different sections of the continuous metal wire 16, thus avoiding the creation of electrical bridges.

An expert in the art will be able to make numerous variations to the method for inducing metal systems to store large quantities of hydrogen and its isotopes and to the equipment for implementing this method, so as to satisfy particular requirements and contingencies, without departing thereby from the protective scope of the invention, as defined in the following claims.

## Claims

1. A method for inducing metal systems to absorb large quantities of hydrogen and/or its isotopes, characterised in that it includes a step of absorption of hydrogen and/or its isotopes in which an electrical voltage is applied to the ends of at least one continuous metal wire constituting the metal system and having a cross-section so as to achieve a drop in electrical potential along the metal wire, said continuous metal wire having at least one portion (20), constituting the metal system (15), arranged in a confined space (12) containing nuclei of hydrogen and/or its isotopes.

2. A method according to Claim 1, characterised in that the predetermined drop in electrical potential in the absorption step is greater than 10 Volts.

3. A method according to Claim 1, characterised in that the area of the cross-section is less than 0.01 mm².

4. A method according to Claims 2 and 3, characterised in that the metal wire is longer than 100 mm.

5. A method according to Claims 2 and 3, characterised in that the electrical resistance of the metal wire is greater than 1 Ohm.

6. A method according to Claim 5, characterised in that the electrical resistance of the metal wire is greater than 10 Ohm.

7. A method according to Claim 1, characterised in that the metal wire is made of a material which includes one or more elements from the following selection: Scandium (Sc), Titanium (Ti), Vanadium (V), Chromium (Cr), Manganese (Mn), Iron (Fe), Cobalt (Co), Nickel (Ni), Copper (Cu), Yttrium (Y), Zirconium (Zr), Niobium (Nb), Molybdenum (Mo), Technetium (Tc), Ruthenium (Ru), Rhodium (Rd), Palladium (Pd), Silver (Ag), Hafnium (Hf), Tantalum (Ta), Tungsten (W), Rhenium (Re), Osmium ()s), Iridium (Ir), Platinum (Pt), Gold (Au), any Lanthanide or Actinide.

8. A method according to Claim 1, characterised in that, in the absorption step, the pressure of the hydrogen and/or its isotopes is less than 1,000 kPa.

9. A method according to Claim 1, characterised in that, in the absorption step, the temperature of the hydrogen and/or its isotopes is below 100°C.

10. A method according to Claim 9, characterised in that, in the absorption step, the temperature of the hydrogen and/or its isotopes is below 60°C.

11. Equipment (10) for implementing the method for inducing metal systems (15) to absorb large quantities of hydrogen and its isotopes in metal systems (15) as defined in any one of the preceding Claims, characterised in that it includes a continuous metal wire (16) having a cross-sectional area with its ends (17, 17') connected to respective different poles (18, 18') of at least one voltage generator (19), the continuous metal wire (16) having at least one portion (20), constituting the metal system (15), arranged in a confined space (12) containing in use nuclei of hydrogen and/or its isotopes to be absorbed.

12. Equipment (10) according to Claim 11, characterised in that the cross-sectional area of the continuous metal wire (16) is less than 0.01 mm².

13. Equipment (10) according to Claim 11, characterised in that a drop in electrical potential of more than 10 Volts is achieved along the said portion (20) of the continuous metal wire (16).

14. Equipment (10) according to Claims 12 and 13, characterised in that the said portion (20) of the continuous metal wire (16) is longer than 100 mm.

15. Equipment (10) according to Claims 12 and 13, characterised in that the electrical resistance of the said portion (20) of the continuous metal wire (16) is greater than 1 Ohm.

16. Equipment (10) according to Claim 15, characterised in that the electrical resistance of the said portion (20) of the continuous metal wire (16) is greater than 10 Ohm.

17. Equipment (10) according to Claim 11, characterised in that the metal item (16) is made of a material which includes one or more metal elements from the following selection: Scandium (Sc), Titanium (Ti), Vanadium (V), Chromium (Cr), Manganese (Mn), Iron (Fe), Cobalt (Co), Nickel (Ni), Copper (Cu), Yttrium (Y), Zirconium (Zr), Niobium (Nb), Molybdenum (Mo), Technetium (Tc), Ruthenium (Ru), Rhodium (Rd), Palladium (Pd), Silver (Ag), Hafnium (Hf), Tantalum (Ta), Tungsten (W), Rhenium (Re), Osmium (Os), Iridium (Ir), Platinum (Pt), Cold (Au), any Lanthanide or Actinide.

18. Equipment (10) according to Claim 11, characterised in that it includes means for removing heat (11c, 13, 14) from the continuous metal wire (16).

19. Equipment (10) according to Claim 11, characterised in that it includes means (27) for tensioning the continuous metal wire (16).

## Patentansprüche

1. Verfahren zum Induzieren von Metall-Systemen, große Mengen an Wasserstoff und/oder seinen Isotopen zu absorbieren, **dadurch gekennzeichnet, daß** es einen Schritt zur Absorption von Wasserstoff und/oder seinen Isotopen enthält, bei dem eine elektrische Spannung an die Enden von Wenigstens einem zusammenhängenden Metalldraht angelegt wird, der das Metall-System bildet und einen Querschnitt hat, um so einen elektrischen Potentialabfall entlang des Metalldrahtes zu bewirken, wobei der zusammenhängende Metalldraht wenigstens einen Abschnitt (20) aufweist, der das Metall-System (15) bildet, das in einem umschlossenen Raum (12) angeordnet ist, welcher Kerne von Wasserstoff und/oder seiner Isotope enthält.

2. Verfahren gemäß Anspruch 1, dadurch gekennzeichnet, daß der vorbestimmte elektrische Potentialabfall bei dem Absorptions-Schritt größer als 10 Volt ist.

3. Verfahren gemäß Anspruch 1, dadurch gekennzeichnet, daß die Fläche des Querschnittes weniger als 0,01mm² beträgt.

4. Verfahren gemäß den Ansprüchen 2 und 3, dadurch gekennzeichnet, daß der Metalldraht länger als 100mm ist.

5. Verfahren gemäß den Ansprüchen 2 und 3, dadurch gekennzeichnet, daß der elektrische Widerstand des Metalldrahtes größer als 1 Ohm ist.

6. Verfahren gemäß Anspruch 5, dadurch gekennzeichnet, daß der elektrische Widerstand des Metalldrahtes größer als 10 Ohm ist.

7. Verfahren gemäß Anspruch 1, dadurch gekennzeichnet, daß der Metalldraht aus einem Material gefertigt ist, welches eines oder mehrere Elemente der nachfolgenden Zusammenstellung enthält: Scandium (Sc), Titan (Ti), Vanadium (V), Chrom (Cr), Mangan (Mn), Eisen (Fe), Kobalt (Co), Nickel (Ni), Kupfer (Cu), Yttrium (Y), Zirconium (Zr), Niob (Nb), Molybdän (Mo), Technetium (Tc), Ruthenium (Ru), Rhodium (Rd), Palladium (Pd), Silber (Ag), Hafnium (Hf), Tantal (Ta), Wolfram (W), Rhenium (Re), Osmium (Os), Iridium (Ir), Platin (Pt), Gold (Au), jegliche Lanthanide oder Actinide.

8. Verfahren gemäß Anspruch 1, dadurch gekennzeichnet, daß in dem Absorptions-Schritt der Druck des Wasserstoffs und/oder seiner Isotope weniger als 1.000kPa beträgt.

9. Verfahren gemäß Anspruch 1, dadurch gekennzeichnet, daß in dem Absorptions-Schritt die Temperatur des Wasserstoffs und/oder seiner Isotope unter 100°C liegt.

10. Verfahren gemäß Anspruch 9, dadurch gekennzeichnet, daß in dem Absorptions-Schritt die Temperatur des Wasserstoffs und/oder seiner Isotope unter 60°C liegt.

11. Vorrichtung (10) zur Durchführung des Verfahrens nach einem der vorstehenden Ansprüche zum Induzieren von Metall-Systemen (15), große Mengen an Wasserstoff und seiner Isotope in Metall-Systemen (15) zu absorbieren, **dadurch gekennzeichnet, daß** sie einen zusammenhängenden Metalldraht (16) enthält, der eine Querschnitts-Fläche hat und dessen Enden (17, 17') mit jeweils unterschiedlichen Polen (18, 18') wenigstens eines Spannungs-Generators (19) verbunden sind, wobei der zusammenhängende Metalldraht (16) wenigstens einen Abschnitt (20) aufweist, der das Metall-System (15) bildet, das in einem umschlossenen Raum (12) angeordnet ist, der Kerne von Wasserstoff und/oder seiner Isotope enthält, die absorbiert werden sollen.

12. Vorrichtung (10) gemäß Anspruch 11, dadurch gekennzeichnet, daß die Querschnitts-Fläche des zusammenhängenden Metalldrahtes (16) weniger als 0,01mm² beträgt.

13. Vorrichtung (10) gemäß Anspruch 11, dadurch gekennzeichnet, daß entlang des Abschnittes (20) des zusammenhängenden Metalldrahtes (16) ein elektrischer Potentialabfall von mehr als 10 Volt bewirkt wird.

14. Vorrichtung (10) gemäß den Ansprüchen 12 und 13, dadurch gekennzeichnet, daß der Abschnitt (20) des zusammenhängenden Metalldrahtes (16) länger als 100mm ist.

15. Vorrichtung (10) gemäß den Ansprüchen 12 und 13, dadurch gekennzeichnet, daß der elektrische Widerstand dieses Abschnittes (20) des zusammenhängenden Metalldrahtes (16) größer als 1 Ohm ist.

16. Vorrichtung (10) gemäß Anspruch 15, dadurch gekennzeichnet, daß der elektrische Widerstand des Abschnittes (20) des zusammenhängenden Metalldrahtes (16) größer als 10 Ohm ist.

17. Vorrichtung (10) gemäß Anspruch 11, dadurch gekennzeichnet, daß der Metallgegenstand (16) aus einem Material gefertigt ist, welches eines oder mehrere Metall-Elemente der nachfolgenden Zusammenstellung enthält: Scandium (Sc), Titan (Ti), Vanadium (V), Chrom (Cr), Mangan (Mn), Eisen (Fe), Kobalt (Co), Nickel (Ni), Kupfer (Cu), Yttrium (Y), Zirconium (Zr), Niob (Nb), Molybdän (Mo), Technetium (Tc), Ruthenium (Ru), Rhodium (Rd), Palladium (Pd), Silber (Ag), Hafnium (Hf), Tantal (Ta), Wolfram (W), Rhenium (Re), Osmium (Os), Iridium (Ir), Platin (Pt), Gold (Au), jegliche Lanthanide oder Actinide.

18. Vorrichtung (10) gemäß Anspruch 11, dadurch gekennzeichnet, daß sie Mittel zur Abfuhr von Wärme (11c, 13, 14) von dem zusammenhängenden Metalldraht (16) enthält.

19. Vorrichtung (10) gemäß Anspruch 11, dadurch gekennzeichnet, daß sie Mittel (27) zum Spannen des zusammenhängenden Metalldrahtes (16) enthält.

## Revendications

1. Procédé pour amener des systèmes métalliques à absorber de grandes quantités d'hydrogène et/ou de ses isotopes, caractérisé en ce qu'il comprend une étape d'absorption d'hydrogène et/ou de ses isotopes dans laquelle une tension électrique est appliquée aux extrémités d'au moins un fil métallique continu constituant le système métallique et ayant une section transversale de façon à établir une chute du potentiel électrique le long du fil métallique, ledit fil métallique continu ayant au moins une partie (20) constituant le système métallique (15), agencée dans un espace confiné (12) contenant des noyaux d'hydrogène et/ou de ses isotopes.

2. Procédé selon la revendication 1, caractérisé en ce que la chute prédéterminée du potentiel électrique dans l'étape d'absorption est supérieure à 10 volts.

3. Procédé selon la revendication 1, caractérisé en ce que l'aire de la section transversale est inférieure à 0,01 mm².

4. Procédé selon les revendications 2 et 3, caractérisé en ce que le fil métallique est d'une longueur supérieure à 100 mm.

5. Procédé selon les revendications 2 et 3, caractérisé en ce que la résistance électrique du fil métallique est supérieure à 1 Ohm.

6. Procédé selon la revendication 5, caractérisé en ce que la résistance électrique du fil métallique est supérieure à 10 Ohms.

7. Procédé selon la revendication 1, caractérisé en ce que le fil métallique est formé d'une matière qui comprend un ou plusieurs éléments provenant de la sélection suivante: du scandium (Sc), du titane (Ti), du vanadium (V), du chrome (Cr), du manganèse (Mn), du fer (Fe), du cobalt (Co), du nickel (Ni), du cuivre (Cu), de l'yttrium (Y), du zirconium (Zr), du niobium (Nb), du molybdène (Mo), du technétium (Tc), du ruthénium (Ru), du rhodium (Rd), du palladium (Pd), de l'argent (Ag), de l'hafnium (Hf), du tantale (Ta), du tungstène (W), du rhénium (Re), de l'osmium (Os), de l'iridium (Ir), du platine (Pt), de l'or (Au) et tout lanthanide ou actinide.

8. Procédé selon la revendication 1, caractérisé en ce que, dans l'étape d'absorption, la pression de l'hydrogène et/ou de ses isotopes est inférieure à 1 000 kPa.

9. Procédé selon la revendication 1, caractérisé en ce que, dans l'étape d'absorption, la température de l'hydrogène et/ou de ses isotopes est inférieure à 100°C.

10. Procédé selon la revendication 9, caractérisé en ce que, dans l'étape d'absorption, la température de l'hydrogène et/ou de ses isotopes est inférieure à 60°C.

11. Equipement (10) pour la mise en oeuvre du procédé pour amener des systèmes métalliques (15) à absorber de grandes quantités d'hydrogène et de ses isotopes dans des systèmes métalliques (15) comme défini dans l'une quelconque des revendications précédentes, caractérisé en ce qu'il comprend un fil métallique continu (16) ayant une aire en section transversale et dont les extrémités (17, 17') sont connectées à des pôles respectifs différents (18, 18') d'au moins un générateur de tension (19), le fil métallique continu (16) ayant au moins une partie (20), constituant le système métallique (15), agencée dans un espace confiné (12) contenant, lors de l'utilisation, des noyaux d'hydrogène et/ou de ses isotopes devant être absorbés.

12. Equipement (10) selon la revendication 11, caractérisé en ce que l'aire de la section transversale du fil métallique continu (16) est inférieure à 0,01 mm².

13. Equipement (10) selon la revendication 11, caractérisé en ce qu'une chute du potentiel électrique de plus de 10 volts est obtenue le long de ladite partie (20) du fil métallique continu (16).

14. Equipement (10) selon les revendications 12 et 13, caractérisé en ce que ladite partie (20) du fil métallique continu (16) est d'une longueur supérieure à 100 mm.

15. Equipement (10) selon les revendications 12 et 13, caractérisé en ce que la résistance électrique de ladite partie (20) du fil métallique continu (16) est supérieure à 1 Ohm.

16. Equipement (10) selon la revendication 15, caractérisé en ce que la résistance électrique de ladite partie (20) du fil métallique continu (16) est supérieure à 10 Ohms.

17. Equipement (10) selon la revendication 11, caractérisé en ce que la pièce métallique (16) est formée d'une matière qui comprend un ou plusieurs des éléments métalliques provenant de la sélection suivante: du scandium (Sc), du titane (Ti), du vanadium (V), du chrome (Cr), du manganèse (Mn), du fer (Fe), du cobalt (Co), du nickel (Ni), du cuivre (Cu), de l'yttrium (Y), du zirconium (Zr), du niobium (Nb), du molybdène (Mo), du technétium (Tc), du ruthénium (Ru), du rhodium (Rd), du palladium (Pd), de l'argent (Ag), de l'hafnium (Hf), du tantale (Ta), du tungstène (W), du rhénium (Re), de l'osmium (Os), de l'iridium (Ir), du platine (Pt), de l'or (Au) et tout lanthanide ou actinide.

18. Equipement (10) selon la revendication 11, caractérisé en ce qu'il comprend un moyen pour éliminer la chaleur (11c, 13, 14) du fil métallique continu (16).

19. Equipement (10) selon la revendication 11, caractérisé en ce qu'il comprend un moyen (27) pour tendre le fil métallique continu (16).
